# NEUE EUROPÄISCHE PATENTSCHRIFT

(11) **EP 1 454 808 B2**
(45) Veröffentlichungstag und Bekanntmachung des Hinweises auf die Entscheidung über den Einspruch: **06.04.2011**
(45) Hinweis auf die Patenterteilung: 24.09.2008
(21) Anmeldenummer: 03010283.4
(22) Anmeldetag: 07.05.2003
(51) Int. Cl.: B61G 5/10, G02B 6/38

(54) **Optische Signalkupplung**
Optical signal coupling
Couplage optique de signaux

(30) Priorität: 07.03.2003 DE 10310134
(43) Veröffentlichungstag der Anmeldung: 08.09.2004
(73) Patentinhaber: era-contact GmbH, 75015 Bretten (DE)
(72) Erfinder: Meyer, Martin Wolfgang, 75217 Birkenfeld-Gräfenhausen (DE)
(74) Vertreter: Schaumburg, Thoenes, Thurn, Landskron, Eckert

(56) Entgegenhaltungen:
- EP-A- 0 395 607
- EP-B1- 0 463 390
- DE-A1- 3 640 099
- DE-A1- 10 032 542
- DE-B1- 2 922 937
- FR-A- 2 691 264
- US-A- 3 809 908
- US-A- 5 917 632

## Beschreibung

Die Erfindung betrifft ferner eine Leitungskupplung für Schienenfahrzeuge nach dem Oberbegriff des Anspruchs 1.

In der Fahrzeugtechnik werden zur Signal- und Datenübertragung in zunehmendem Maße Lichtwellenleiter verwendet, die gegenüber herkömmlichen elektrischen Signalleitungen wesentliche Vorteile besitzen. Zu diesen Vorteilen gehören ihre größere Übertragungsbandbreite und ihre vergleichsweise geringe Anfälligkeit gegenüber elektromagnetischen Störfeldern. Optische Signalkupplungen der eingangs genannten Art werden benötigt, wenn Signale nicht nur innerhalb eines Fahrzeuges, sondern auch zwischen zwei miteinander gekuppelten Fahrzeugen, wie beispielsweise den Wagen eines Zugverbandes, übertragen werden sollen.

Eine optische Signalkupplung der eingangs genannten Art ist beispielsweise aus DE 28 54 962 C2 bekannt, in der eine Mittelpufferkupplung für Schienenfahrzeuge beschrieben ist. Zu der Mittelpufferkupplung gehört eine Leitungskupplung, die unter anderem dazu dient, Impulse für die Steuerung des Brems- und Fahrstromes in einem Zugverband von einem Wagen auf den anderen zu übertragen. Die Leitungskupplung besteht aus zwei Kontaktträgern, von denen jeweils einer an jedem Wagen befestigt ist und in denen neben einer Vielzahl elektrischer Kontakte auch jeweils ein Lichtwellenleiter angeordnet ist. Von den Lichtwellenleitern ist einer derart elastisch vorgespannt, dass die beiden Lichtwellenleiter mit ihren Stirnflächen aneinander gedrückt werden, wenn die Kontaktträger beim Kuppeln der Wagen aufeinander zu bewegt werden. Über diese aneinander gedrückten Lichtwellenleiter können optische Signale von einem Wagen zum anderen übertragen werden.

Bei einer derartigen optischen Signalkupplung treten jedoch häufig Übertragungsfehler auf. Eine Ursache dafür liegt darin, dass die optischen Signale bei ihrer Übertragung von einem Lichtwellenleiter auf den anderen sowohl infolge eines Versatzes als auch infolge eines Verkippens der optischen Achsen der beiden Lichtwellenleiter relativ zueinander stark gedämpft werden, was zu einer Verfälschung der optischen Signale führt. Ein derartiger Versatz bzw. eine derartige Verkippung der optischen Achsen lässt sich jedoch bei miteinander gekuppelten Fahrzeugen kaum vermeiden, da die beiden Kupplungsteile nicht starr miteinander verbunden sind und verhältnismäßig stark mechanisch beansprucht werden. Weitere Ursachen für eine unzuverlässige Signalübertragung liegen in der Empfindlichkeit derartiger Signalkupplungen für Verschleiß und Verschmutzung, die unter den bei Fahrzeuganwendungen relativ rauen Bedingungen ebenfalls unvermeidlich sind.

Um diese Probleme zu umgehen, wurde in DE 29 22 937 C2 eine optische Signalkupplung vorgeschlagen, in der die Lichtwellenleiter nicht mit ihren Stirnflächen aneinander stoßen, sondern das Licht mit Hilfe von Linsensteckern durch die Luft von einem Lichtwellenleiter auf den anderen übertragen wird. Eine derartige Signalkupplung ist jedoch relativ kompliziert und teuer und konnte nicht die Zuverlässigkeit bieten, die man sich von ihr versprochen hatte.

In Anbetracht der oben genannten Schwierigkeiten wurde kürzlich in der DE 100 52 020 A1 vorgeschlagen, bei Anwendungen unter rauen Bedingungen auf eine herkömmliche optische Kupplung von Lichtwellenleitern vollständig zu verzichten und stattdessen die in einem ersten Lichtwellenleiter geleiteten optischen Signale zunächst in elektrische Signale umzuwandeln, diese über eine herkömmliche Elektrokupplung zu übertragen, die übertragenen elektrischen Signale wiederum in optische Signale umzuwandeln und in einen zweiten Lichtwellenleiter einzuspeisen. Bei dieser Lösung verzichtet man allerdings auf die vorstehend genannten Vorteile einer optischen Signalkupplung, nämlich die einer höheren Übertragungsbandbreite und einer geringeren Anfälligkeit gegenüber elektromagnetischen Störfeldern. Da aber im Kupplungsbereich von Fahrzeugen typischerweise neben Signalen auch hohe Ströme übertragen werden und daher gerade dort starke elektromagnetische Störfelder vorliegen, ist es ungünstig, die optische Signalkupplung durch eine den Störfeldern gegenüber empfindlichere Elektrokupplung zu ersetzen. Außerdem bietet der Kupplungsbereich von Fahrzeugen nur einen begrenzten Platz für die Signalkupplungen, der von optischen Signalkupplungen mit ihrer höheren Übertragungsbandbreite effizienter genutzt wird, als von elektrischen.

In der US-A-5,917,632 ist eine optische Signalkupplung für eine Zugmaschine und einen Anhänger beschrieben. Diese Signalkupplung hat ein erstes Kupplungsteil, das über einen Luftschlauch mit der Zugmaschine gekuppelt ist. Die Signalkupplung hat ferner ein zweites Kupplungsteil, das an dem Anhänger festgelegt ist. Jedes Kupplungsteil hat eine Sendeeinrichtung und eine Empfangseinrichtung, mit denen zu übertragende optische Signale erzeugt und detektiert werden.

Der vorliegenden Erfindung liegt die Aufgabe zugrunde, eine Anordnung, umfassend eine automatische Schienenfahrzeugskupplung und eine Leitungskupplung mit einer optischen Signalkupplung anzugeben, die eine zuverlässige Übertragung von Signalen zwischen miteinander gekuppelten Fahrzeugen gestattet.

Diese Aufgabe wird bei einer Anordnung, umfassend eine Leitungskupplung mit einer optischen Signalkupplung der eingangs genannten Art dadurch gelöst, dass das erste Kupplungsteil eine Sendeeinrichtung beinhaltet, die die zu übertragenden optischen Signale erzeugt, und das zweite Kupplungsteil eine Empfangseinrichtung beinhaltet, die die übertragenen optischen Signale detektiert.

Im Gegensatz zu herkömmlichen Signalkupplungen, die im wesentlichen eine ihrer Natur nach passive Kupplung zweier Lichtleiter darstellen, hat die erfindungsgemäße Signalkupplung aktive Elemente, mit deren Hilfe die zu übertragenden optischen Signale eigens in der Signalkupplung erzeugt werden und die übertragenen optischen Signale noch in der Signalkupplung ausgelesen werden.

Da die optischen Signale ausschließlich zum Passieren der Signalkupplung bestimmt sind, können sie an die speziellen optischen Gegebenheiten der Signalkupplung angepasst werden, wodurch die Zuverlässigkeit der Signalübertragung wesentlich erhöht wird. Wenn die Signalkupplung beispielsweise infolge von Verschmutzung, Verschleiß, Betauen oder mechanischen Ungenauigkeiten eine höhere Dämpfung der übertragenen Signale bewirkt, als erwartet, kann das im ersten Kupplungsteil erzeugte Signal entsprechend stärker ausgelegt und die erhöhte Dämpfung dadurch kompensiert werden.

Tatsächlich kann aufgrund dieser Kompensationsmöglichkeit eine gewisse optische Dämpfung der Signalkupplung sogar billigend in kauf genommen werden, was die Anforderungen an die Qualität der Optik der Signalkupplung senkt. Dadurch können Herstellungskosten in einem Umfang eingespart werden, die den Mehraufwand der Bereitstellung der Sende- und Empfangseinrichtung mehr als ausgleichen.

Es ist sogar möglich, im ersten Kupplungsteil optische Signale zu erzeugen, die so stark sind, dass sie vom zweiten Kupplungsteil bereits empfangen werden können, wenn die Fahrzeuge zwar nahe beieinander stehen, jedoch noch nicht gekuppelt sind und sich die Stirnflächen der lichtleitenden Elemente noch nicht berühren. Eine Signalübertragung im ungekuppelten Zustand kann beispielsweise beim Einkuppeln in einer Kurve nützlich sein. Dabei können nämlich Informationen über die Stellung der Räder relativ zum Fahrzeug übermittelt werden, die Aufschluss über die Krümmung der Kurve geben und somit helfen, die Teile der mechanischen Kupplung zum Einkuppeln aneinander auszurichten.

Bei der Übertragung eines Signals von einem Fahrzeug auf das andere ist der Signalweg bei Verwendung der erfindungsgemäßen Signalkupplung stets in drei Abschnitte unterteilt: Einen Abschnitt von einer Signalquelle zum ersten Kupplungsteil, einen Abschnitt vom zweiten Kupplungsteil zum Signalziel und einen dazwischenliegenden Abschnitt, in dem das Signal die Signalkupplung in Form des in der Sendeeinrichtung des ersten Kupplungsteiles erzeugten optischen Signals passiert. Kommt das Signal fehlerhaft am Ziel an, lässt sich relativ leicht herausfinden, in welchem der drei Abschnitte die Fehlerquelle liegt. Beispielsweise können den in der Sendeeinrichtung erzeugten optischen Signalen Kontrollsignale beigefügt werden, anhand derer die Empfangseinrichtung feststellen kann, ob die Signale korrekt übertragen wurden. Außerdem lassen sich die Signale in der Sende- und Empfangseinrichtung aufbereiten, wodurch die Zuverlässigkeit der Signalübertragung ebenfalls erhöht wird.

Bei herkömmlichen optischen Signalkupplungen hingegen akkumulieren sich die Störungen in allen drei Abschnitten. Dadurch treten nicht nur leichter Übertragungsfehler auf, sondern es ist auch schwierig festzustellen, in welchem Abschnitt der Signalstrecke die Ursache für die Störung liegt, falls überhaupt eine einzige Störungsquelle vorliegt und nicht eine Kombination von Störungsquellen ursächlich ist.

Ein weiterer Vorteil der erfindungsgemäßen Signalkupplung liegt darin, dass sie breiter einsetzbar ist als eine herkömmliche. Während herkömmliche optische Signalkupplungen wie gesagt im wesentlichen dazu dienen, zwei in den gekuppelten Fahrzeugen vorliegende Lichtwellenleiter zu verbinden, können mit der erfindungsgemäßen Signalkupplung Signale allgemeiner Art übertragen werden, d. h. unabhängig davon, ob sie in den einzelnen Fahrzeugen als optische, elektrische, hydraulische oder pneumatische Signale vorliegen. Denn in jedem Fall wird das in einem Fahrzeug vorliegende (elektrische, optische, hydraulische oder pneumatische) Signal in der Sendeeinrichtung des ersten Kupplungsteiles in ein speziell zum Passieren der optischen Signalkupplung bestimmtes optisches Signal umgewandelt, das von der Empfangseinrichtung des zweiten Kupplungsteiles detektiert wird und aus dem dann das ursprüngliche (elektrische, optische bzw. pneumatische) Signal rekonstruiert und im anderen Fahrzeug weitergeleitet wird.

Vorzugsweise beinhaltet das erste Kupplungsteil einen Mikroprozessor, der die Erzeugung der Signale in der Sendeeinrichtung steuert. Zusätzlich oder alternativ beinhaltet das zweite Kupplungsteil vorzugsweise einen Mikroprozessor, der die in der Empfangseinrichtung detektierten Signale verarbeitet. Durch die Verwendung von Mikroprozessoren zur Signalerzeugung bzw. Signalverarbeitung lässt sich die Zuverlässigkeit und Flexibilität der optischen Signalkupplung weiter steigern. Denn mit Hilfe der Mikroprozessoren können die Signale unter anderem überprüft und aufbereitet werden. Außerdem können mit der optischen Signalkupplung zwei Fahrzeuge unterschiedlichen Bautyps verbunden werden, bei denen die Signale auf unterschiedliche Weise verarbeitet und/oder weitergeleitet werden. Die Signale können dann mit Hilfe der Mikroprozessoren geleitet werden. Die Signale können dann mit Hilfe der Mikroprozessoren schon in der Signalkupplung in die Form gebracht werden, die im jeweiligen Fahrzeug erforderlich ist.

In einer vorteilhaften Weiterbildung ist der Mikroprozessor des ersten Kupplungsteiles so programmiert, dass er mehrere individuelle Signale zu Multiplexsignalen vereint, und der Mikroprozessor des zweiten Kupplungsteiles so programmiert, dass er Multiplexsignale in mehrere individuelle Signale zerlegt. Dann können mehrere unterschiedliche Signale gleichzeitig über die Signalkupplung übertragen werden, wodurch Signalkupplungen eingespart werden können.

In einer vorteilhaften Weiterbildung der optischen Signalkupplung ist in dem ersten und zweiten Kupplungsteil jeweils ein lichtleitendes Element gehalten, von denen eines eine sphärisch konkave Stirnfläche und das andere eine mit gleichen Krümmungsradius sphärisch konvexe Stirnfläche hat und von denen mindestens eines derart elastisch vorgespannt ist, dass die lichtleitenden Elemente mit ihren Stirnflächen aneinander gedrückt werden, wenn die zwei Fahrzeuge miteinander gekuppelt sind. Im gekuppelten Zustand liegt die konvexe Stirnfläche des einen Kupplungsteiles dann passgenau in der konkaven Stirnfläche des anderen Kupplungsteiles, und zwar ohne einen Luftspalt zwischen den Stirnflächen zu lassen, der eine Dämpfung der optischen Signale zur Folge hätte.

Unter der aus der Vorspannung des einen oder beider lichtleitender Elemente resultierenden Andruckkraft wird die konvexe Stirnfläche in die Aushöhlung der konkaven Stirnfläche gedrückt, wodurch die beiden Kupplungsteile automatisch miteinander zentriert werden. Dadurch wird bei der Signalkupplung ein Versatz der optischen Achsen der lichtleitenden Elemente vermieden, der bei herkömmlichen Signalkupplungen zu einer Dämpfung der optischen Signale führt.

Darüber hinaus gestatten die sphärischen Stirnflächen eine Verkippung der optischen Achsen der lichtleitenden Elemente gegeneinander, ohne dass die Stirnflächen voneinander abgehoben werden. Bei einer derartigen Verkippung gleitet nämlich die sphärisch konvexe Stirnfläche an der sphärisch konkaven Stirnfläche entlang wie ein Gelenkkopf in einer Gelenkpfanne, ohne dass sich ein Luftspalt zwischen den Stirnflächen ergibt. Darin besteht ein großer Vorteil gegenüber herkömmlichen Signalkupplungen mit ebenen Stirnflächen, zwischen denen sich bei einer Verkippung der Kupplungsteile relativ zueinander unweigerlich ein Luftspalt bildet, der zu einer unzulässigen Dämpfung der übertragenen Signale führt.

Die Möglichkeit einer geringen Dämpfung bei Verkippung der Kupplungsteile gegeneinander ist insbesondere von großer Bedeutung, wenn die Signalkupplung zum Übertragen von optischen Signalen zwischen Schienenfahrzeugen verwendet wird. Obwohl bei herkömmlichen Signalkupplungen für Schienenfahrzeuge versucht wird, die Kupplungsteile linear zu führen, d.h. ein Verkippen der Kupplungsteile gegeneinander zu verhindern, gelingt dies in der Praxis infolge der hohen mechanischen Belastungen nicht zuverlässig, was zu einer übermäßigen Dämpfung der übertragenen optischen Signale führt. Bei der beschriebenen Weiterbildung der Signalkupplung kann hingegen auf eine Linearführung im Prinzip völlig verzichtet werden, weil selbst relativ große Verkippungen der Kupplungsteile gegeneinander zu einer tolerierbaren Dämpfung der Signale führen. Die weitergebildete Signalkupplung ist also zu einem gewissen Grade "knickbar".

Vorzugsweise bestehen die lichtleitenden Elemente der weitergebildeten Signalkupplung jeweils aus einer lichtundurchlässigen Hülse und einem darin aufgenommenen transparenten Kern. Wenn die Kupplungsteile gekuppelt sind, bilden die lichtundurchlässigen Hülsen einen von Tageslicht abgeschirmten Lichttunnel. Damit auch beim Verkippen der lichtleitenden Elemente relativ zueinander kein Tageslicht in den transparenten Kern einfallen kann, darf die Wanddicke der Hülse im Bereich der Stirnflächen nicht zu gering sein. Vorteilhaftetweise beträgt sie mindestens 1/10, vorzugsweise mindestens 1/5 des Krümmungsradius der Stirnfläche.

In einer bevorzugten Weiterbildung sind die lichtundurchlässigen Hülsen elektrisch leitend und wird beim Aneinanderdrücken der Stirnflächen der lichtleitenden Elemente der beiden Kupplungsteile ein elektrischer Kontakt zwischen den zugehörigen Hülsen hergestellt, über den elektrische Signale von einem Kupplungsteil auf das andere übertragbar sind. Dadurch wird ein zweiter, unabhängiger Kanal zur Signalübertragung geschaffen, der die Zuverlässigkeit der optischen Signalkupplung weiter erhöht.

Wenn die lichtleitenden Elemente aus einer lichtundurchlässigen Hülse und einem transparenten Kern bestehen, hat die zugehörige sphärische Stirnfläche im Normalfall einen Abschnitt, der von der Hülse und einen Abschnitt, der von dem transparenten Kern gebildet wird. Wenn der Kern und die Hülse beispielsweise zylindrische Form haben, hat der vom Kern gebildete Teil der Stirnfläche die Gestalt eines Kugelsegmentes, das im Normalfall in einem von der Hülse gebildeten ringförmigen Abschnitt stetig fortgesetzt wird.

In der oben genannten Weiterbildung, bei der elektrische Signale über die Hülse übertragen werden können, ist der von der Hülse gebildete Abschnitt der Stirnfläche vorzugsweise hartvergoldet, um einen Korrosionsbeständigen Kontakt zu erhalten.

Um einen guten elektrischen Kontakt zwischen den Hülsen zu erhalten, ist es vorteilhaft, die Hülse etwas über den transparenten Kern vorstehen zu lassen.

In diesem Fall wird dann die Stirnfläche als die Fläche, mit der die lichtleitenden Elemente aneinanderstoßen, abweichend vom oben beschriebenen Normalfall nur durch das sphärisch geformte Hülsenende gebildet, das die Gestalt eines Ringförmigen Sphärenausschnittes hat. Auch ein solcher Sphärenausschnitt wird im Rahmen dieser Schrift als "sphärische Fläche" bezeichnet. Somit ist das sphärisch geformte Hülsenende als Spezialfall der oben genannten "sphärischen Stirnfläche" aufzufassen.

Vorzugsweise wird zumindest ein Teil der Signale, die als optische Signale zwischen den Kupplungsteilen zu übertragen sind, zusätzlich als elektrische Signale über die Hülsen der beiden Kupplungsteile übertragen. Falls die Übertragung der optischen Signale gestört werden oder vollständig ausfallen sollte hat man diese an sich redundanten elektrischen Signale in Reserve. Diese doppelte Übertragung auf unterschiedlichem Wege ist bei sicherheitsrelevanten Signalen (z.B. Bremssignalen bei einem Zugverband) von großer Bedeutung, bei der eine fehlerhafte oder unvollständige Signalübertragung unbedingt vermieden werden muss.

Vorzugsweise hat das erste und/oder das zweite Kupplungsteil der Signalkupplung ein Gehäuse, an dessen einem axialen Ende ein hülsenartiger Abschnitt ausgebildet ist, in dem das lichtleitende Element axial verschiebbar gelagert und in Richtung auf dieses eine axiale Ende elastisch vorgespannt ist, und an dessen anderem Ende ein Anschlussbolzen ausgebildet ist, der zum Einsetzen in einen Kontaktträger bestimmt ist.

Wenn die Hülsen der lichtleitenden Elemente elektrisch leitend sind, besteht zwischen der Hülse des lichtleitenden Elementes und dem hülsenartigen Abschnitt des Gehäuses eines jeden Kupplungsteiles vorzugsweise ein elektrischer Schleifkontakt, über den elektrische Signale übertragbar sind. Dann kann das Gehäuse zur Zu- und Weiterleitung der elektrischen Signale verwendet werden.

Der Anschlussbolzen besteht vorzugsweise aus zwei gegeneinander isolierten Abschnitten, von denen der eine mit einem Massepotential und der andere mit einer elektrischen Signalleitung verbunden ist, wenn der Anschlussbolzen in den Kontaktträger eingesetzt ist.

Optische Signalkupplungen für Fahrzeuge sind üblicherweise in speziellen Leitungskupplungen integriert, deren Hälften ein geringes mechanisches Spiel haben. Da die beschriebene Signalkupplung jedoch gegenüber einer Verstellung der Kupplungsteile relativ zueinander weit weniger empfindlich ist als einen herkömmliche, ist eine spezielle Leitungskupplung für sie nicht unbedingt erforderlich. Stattdessen können die Kupplungsteile auch direkt in den Kupplungsköpfen einer mechanischen Kupplung angeordnet sein. Das typischerweise zwischen den Kupplungsköpfen auftretende Spiel kann die gezeigte optische Signalkupplung ausgleichen, ohne dass ihre Funktion beeinträchtigt würde.

Vorzugsweise ist in jedem Kontaktträger jeweils sowohl ein Signalkupplungsteil mit Sendeeinrichtung als auch ein Signalkupplungsteil mit Empfangseinrichtung angeordnet, die zusammen zwei optische Signalkupplungen der oben beschriebenen Art bilden. Dann können von beiden Seiten der Leitungskupplung optische Signale auf die jeweils andere Seite gesendet werden. Dabei sind vorzugsweise die Sende- und Empfangseinrichtung der Kupplungsteile eines jeden Kontaktträgers mit einem gemeinsamen Mikroprozessor verbunden, der die Erzeugung der Signale in der Sendeeinrichtung steuert und die in der Empfangseinrichtung detektierten Signale verarbeitet.

Weitere Vorteile und Merkmale der Erfindung ergeben sich aus der folgenden Beschreibung, in der die Signal kupplung anhand eines Ausführungsbeispieles näher erläutert wird. Darin zeigen:
- Fig.1: eine Schnittdarstellung eines ersten Kupplungsteiles einer Signalkupplung in Explosionsdarstellung (oben) und im zusammengesetzten Zustand (unten),
- Fig.2: eine Schnittdarstellung eines zweiten Kupplungsteiles einer Signalkupplung in Explosionsdarstellung (oben) und im zusammengesetzten Zustand (unten),
- Fig.3: eine Schnittdarstellung der Kupplungsteile von Figuren 1 und 2 im gekuppelten Zustand,
- Fig.4: die gekuppelten Kupplungsteile von Figur 3, deren Abstand in Richtung der optischen Achse verkürzt ist,
- Fig.5: die gekuppelten Kupplungsteile von Figur 3, deren optische Achsen gegeneinander verkippt sind,
- Fig.6: eine Funktionsskizze einer Sendeeinrichtung des ersten Kupplungsteiles,
- Fig.7: eine Funktionsskizze einer Empfangseinrichtung des zweiten Kupplungsteiles und
- Fig.8: eine Schnittansicht eines Abschnitts einer Leitungskupplung für Schienenfahrzeuge mit zwei Kontaktträgern, in die jeweils ein Kupplungsteil der Signalkupplung eingesetzt ist.

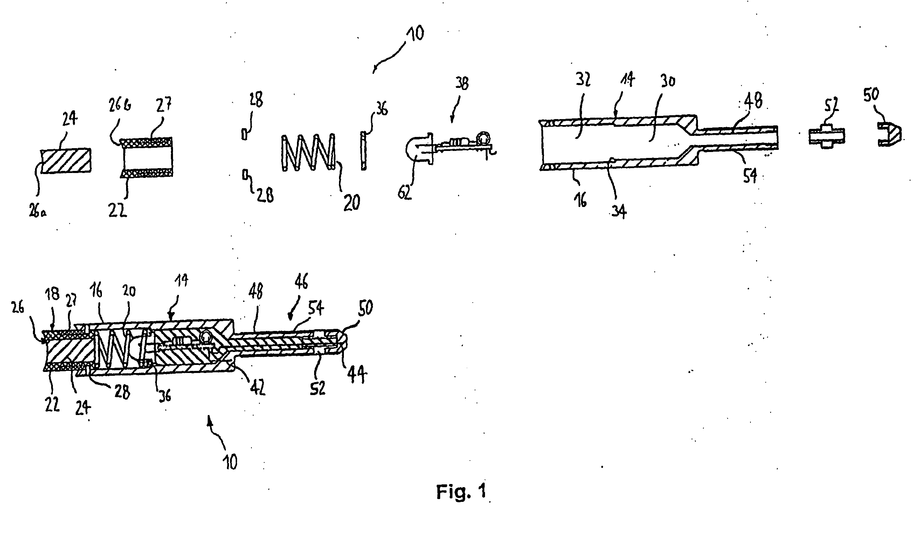

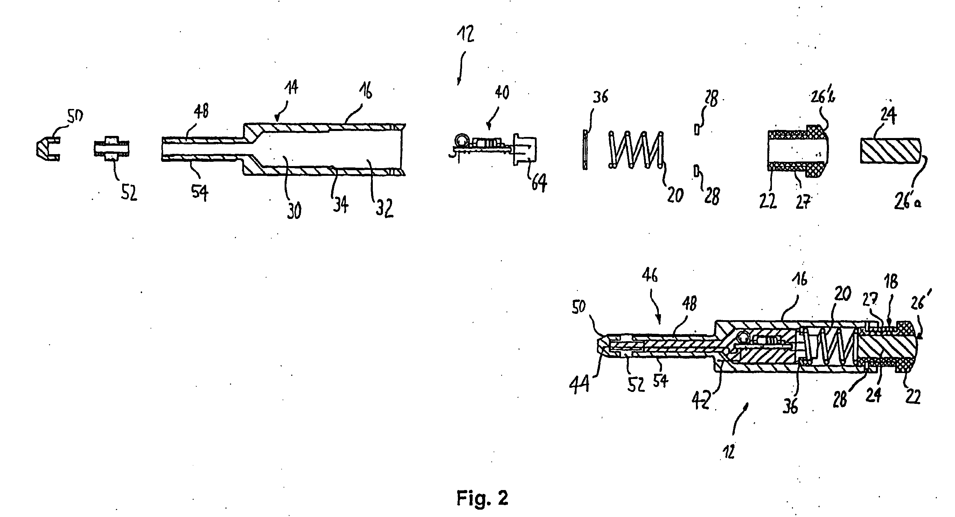

In Figur 1 ist eine Längsschnittsansicht des ersten Kupplungsteiles 10 einer Signalkupplung nach einer Weiterbildung der vorliegenden Erfindung in Explosionsdarstellung (oben) und im zusammengesetzten Zustand (unten) gezeigt. In Figur 2 ist eine Längsschnittsdarstellung des zweiten Kupplungsteiles 12 der gleichen Signalkupplung in Explosionsdarstellung (oben) und im zusammengesetzten Zustand (unten) gezeigt. Da das erste und das zweite Kupplungsteil 10 bzw. 12 in vielen Merkmalen identisch sind, werden sie im folgenden gemeinsam beschrieben, wobei gleichartige Teile durch die gleichen Bezugszeichen gekennzeichnet werden.

Die Kupplungsteile 10 und 12 haben jeweils ein Gehäuse 14 mit einem hülsenartigen Abschnitt 16, in dem ein lichtleitendes Element 18 axial verschiebbar gelagert ist. Die lichtleitenden Elemente 18 können gegen die Vorspannkraft einer Feder 20 in den hülsenartigen Abschnitt 16 des jeweiligen Gehäuses 14 gedrückt werden. Statt durch die Feder 20 können die Lichtleitenden Elemente 18 auch durch im hülsenartigen Abschnitt 16 eingeschlossenes Gas vorgespannt sein. Die lichtleitenden Elemente 18 bestehen jeweils aus einer lichtundurchlässigen Hülse 22 und einem darin aufgenommenen transparenten Kern 24.

Das lichtleitende Element 18 des ersten Kupplungsteils hat eine dem hülsenartigen Gehäuseabschnitt 16 abgewandte sphärisch konkave Stirnfläche 26 (Figur 1) und das lichtleitende Element 18 des zweiten Kupplungsteiles 12 eine sphärisch konvexe Stirnfläche 26' (Figur 2), deren Krümmungsradius mit demjenigen der sphärisch konkaven Stirnfläche 26 übereinstimmt. Die sphärisch konkave Stirnfläche 26 und die sphärisch konvexe Stirnfläche 26' sind nicht nur im transparenten Kern 24 ausgebildet, sondern werden im axialen Ende der jeweiligen Hülse 22 des lichtleitenden Elementes 18 stetig fortgesetzt.

Die sphärische Stirnfläche 26 bzw. 26' des ersten bzw. zweiten Kupplungsteils 10 bzw. 12 hat somit einen durch den transparenten Kern 24 gebildeten Abschnitt 26a bzw. 26'a und einen durch die Hülse 22 gebildeten Abschnitt 26b bzw. 26'b. Die Abschnitte 26b und 26'b sind dabei ringförmige Sphärenausschnitte. Auch ein derartiger Sphärenausschnitt wird in der vorliegenden Schrift als "sphärische Fläche" bezeichnet.

In den Hülsen 22 sind Führungsnuten 27 ausgebildet, in die Führungsbolzen 28 eingreifen. Die Verschiebungsbewegung der lichtleitenden Elemente 18 wird dadurch begrenzt, dass eines der Enden der Führungsnut 27 am Führungsbolzen 28 anstößt.

Der Innenraum des hülsenartigen Gehäuseabschnittes 16 besteht aus zwei zylindrischen Abschnitten, einem innen liegenden Abschnitt 30 und einem weiter außen liegenden Abschnitt 32, dessen Durchmesser größer ist als der des innen liegenden Abschnittes 30. Zwischen den zylindrischen Innenraumsabschnitten 30 und 32 ist ein Absatz 34 in der Gehäuseinnenwand ausgebildet. Im äußeren Innenraumabschnitt 32 befinden sich das lichtleitende Element 18 und die Feder 20, die sich mit einem Ende am lichtleitenden Element 18, mit dem anderen Ende an einem Metallring 36 abstützt, der seinerseits am Absatz 34 aufliegt.

Im inneren Innenraumabschnitt 30 befindet sich beim ersten Kupplungsteil 10 eine Sendeeinrichtung 38 (Figur 1) und beim zweiten Kupplungsteil eine Empfangseinrichtung 40 (Figur 2). Sowohl die Sendeeinrichtung 38 als auch die Empfangseinrichtung 40 haben einen Masseanschluss 42, der mit dem hülsenartigen Abschnitt 16 des Gehäuses 14 verlötet ist, und einen Signalanschluss 44.

Das Gehäuse 14 hat an seinem dem lichtleitenden Element 18 abgewandten Ende einen hohlen Anschlussbolzen 46 mit einem Massenanschlussabschnitt 48, einem Signalanschlussabschnitt 50 und einem dazwischen liegenden Isolierungsstück 52, das die Abschnitte 48 und 50 voneinander elektrisch isoliert. Der Signalanschluss 44 ist durch den Hohlraum im Anschlussbolzen 46 geführt und mit dem Signalanschlussstück 50 verlötet. Der innere Innenraumabschnitt 30 und der Hohlraum des Anschlussbolzens 46 sind mit Vergussmasse ausgegossen, die in den Figuren 1 und 2 durch Schraffierung dargestellt ist. Am Masseanschlussabschnitt 48 des Anschlussbolzens 46 ist ein Außengewinde 54 ausgebildet, mit dem das Kupplungsteil 10 bzw. 12 in eine auf Massepotential befindliche Fassung in einem Kontaktträger einschraubbar ist.

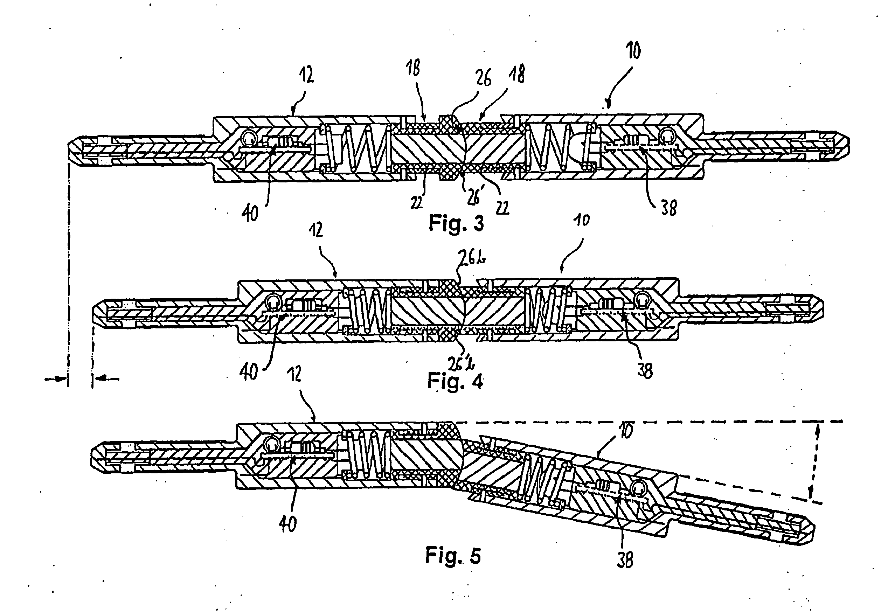

In Figur 3 sind das erste Kupplungsteil 10 und das zweite Kupplungsteil 12 im gekuppelten Zustand gezeigt. Dabei werden die Stirnflächen 26 bzw. 26' des jeweiligen lichtleitenden Elementes 18 aneinander gepresst, so dass optische Signale, die von der Sendeeinrichtung 38 in den transparenten Kern 24 des lichtleitenden Elementes 18 des ersten Kupplungsteils 10 eingespeist werden, durch die Stirnflächen 26 und 26' in den transparenten Kern 22 des lichtleitenden Elementes 18 des zweiten Kupplungsteiles 12 übertragen und von der Empfangseinrichtung 40 detektiert werden. Dabei bilden die lichtundurchlässigen Hülsen 22 der lichtleitenden Elemente 18 einen von Tageslicht abgeschirmten Lichttunnel, der die Sendeeinrichtung 38 und die Empfangseinrichtung 40 verbindet.

Da die beiden lichtleitenden Elemente 18 jeweils verschiebbar in dem Gehäuse 14 der Kupplungsteile 10 bzw. 12 gelagert sind, können die Kupplungsteile etwas aufeinander zu und voneinander weg bewegt werden, ohne dass die Funktion der Signalkupplung beeinträchtigt würde. In Figur 4 sind beispielsweise die Kupplungsteile 10 und 12 von Figur 3 etwas aufeinander zu bewegt, ohne dass sich die Lage der lichtleitenden Elemente 18 zueinander geändert hätte, so dass auch die Lichtübertragung unbeeinflusst bleibt. Die gezeigte Signalkupplung gestattet also eine gewisse Toleranz in der relativen Anordnung der beiden Kupplungsteile 10 und 12 in Kupplungsrichtung, d.h. entlang der optischen Achsen der lichtleitenden Elemente 18, die durch die Mittelachse derselben gebildet wird. Ferner wirken die mit Federdruck belasteten Stirnflächen 26 und 26' einem Versatz der optischen Achsen der lichtleitenden Elemente 18 entgegen, d.h. sie helfen, die beiden Kupplungsteile aneinander auszurichten und die ausgerichtete Lage beizubehalten.

In Figur 5 sind ebenfalls die beiden Kupplungsteile 10 und 12 im gekuppelten Zustand gezeigt. Anders als in den Figuren 3 und 4 sind hier die Kupplungsteile 10 und 12 jedoch nicht auf einer Linie angeordnet, sondern gegeneinander verkippt. Das bedeutet, dass die optischen Achsen der lichtleitenden Elemente 18, die jeweils mit der Symmetrieachse des transparenten Kernes 24 zusammenfallen, in einem Winkel zueinander stehen. Aufgrund ihrer sphärischen Gestalt liegen die Stirnflächen 26 und 26' dennoch lückenlos aneinander an, so dass sich die Dämpfung des Lichtes beim Durchtritt durch die Stirnflächen 26 und 26' in Grenzen hält. Die Signalkupplung ist also zu einem gewissen grad knickbar, ohne dass ihre Funktion beeinträchtigt würde. Dies ist ein großer Vorteil gegenüber üblicherweise verwendeten ebenen Stirnflächen, die bei einer derartigen Verkippung voneinander abgehoben würden, so dass die Lichtübertragung von einem Kupplungsteil auf das andere stark gedämpft würde.

In Figur 5 ist die Signalkupplung in ihrer maximal geknickten Lage gezeigt, in der die Kupplungsteile um 11° gegeneinander verkippt sind. Bei einer weiteren Verkippung würde Tageslicht in den Lichttunnel eintreten und das optische Signal verfälschen. Der Grenzwinkel, bei dem Tageslicht in den Lichttunnel eindringen würde, hängt vom Verhältnis der Wanddicke der lichtundurchlässigen Hülsen im Bereich der Stirnflächen 26 bzw. 26' zum Krümmungsradius der Stirnflächen 26, 26' ab. Im gezeigten Ausführungsbeispiel ist die Wanddicke der lichtundurchlässigen Hülse 22 des ersten Kupplungsteiles im Bereich der Stirnfläche 26 geringer als die der lichtundurchlässigen Hülse 22 des zweiten Kupplungsteiles 12, und somit für die Bestimmung des Grenzwinkels maßgeblich. Sie beträgt etwa 1/5 des Krümmungsradius der sphärischen Stirnflächen 26 und 26'.

Wie den Figuren 3 bis 5 zu entnehmen ist, berühren sich die beiden Kupplungsteile 10, 12 mit ihren von der jeweiligen Hülse 22 gebildeten sphärischen Stirnflächenabschnitten 26b bzw. 26'b. Daher können über die beiden Hülsen 22 zusätzlich elektrische Signale zwischen den beiden Kupplungsteilen 10 und 12 übertragen werden, sofern diese elektrisch leitend ausgebildet sind. Die Stirnflächenabschnitte 26b und 26'b sind dann vorzugsweise hartvergoldet.

Durch die zusätzliche Übertragungsmöglichkeit für elektrische Signale lässt sich die Zuverlässigkeit der Signalübertragung weiter steigern. Als besondere Sicherheitsreserve bietet es sich an, die optischen Signale oder den wichtigsten Teil davon zusätzlich als (redundante) elektrische Signale über die Hülsen 22 zu übertragen.

Um den Hülsen 22 die elektrischen Signale zuzuführen und sie von diesen weiterzuleiten können die Signale in einer (in den Figuren nicht gezeigten) Abwandlung über das Gehäuse 14 geleitet werden, welches in diesem Fall abweichend von den Darstellungen der Figuren 1 bis 5 nicht auf Masse gelegt wäre. Zwischen dem hülsenartigen Gehäuseabschnitt 16 und der Hülse 22 kann dann ein Schleifkontakt bestehen (nicht gezeigt).

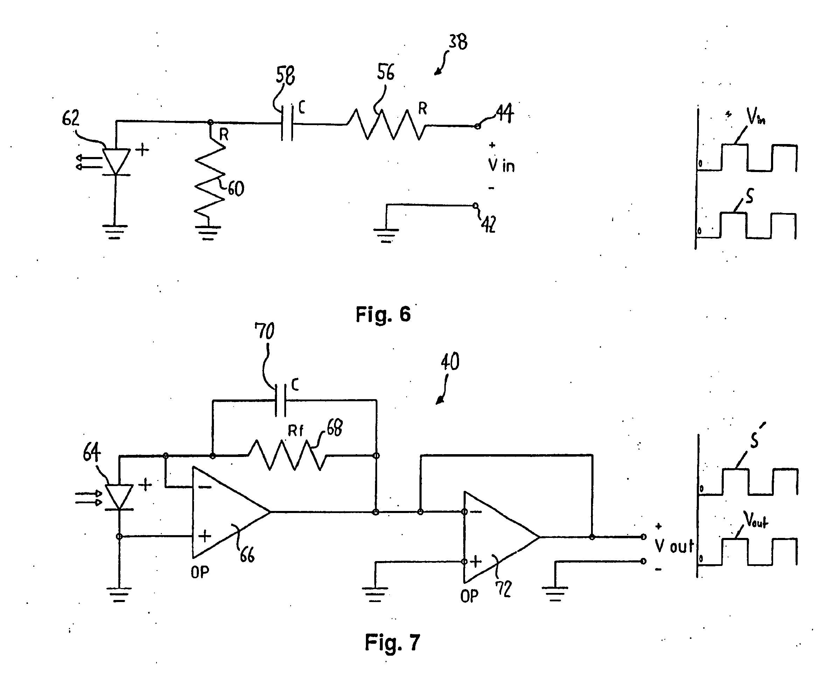

In Figur 6 ist eine Funktionsskizze der Sendeeinrichtung 38 gezeigt. Wie dieser zu entnehmen, wird eine zwischen dem Masseanschluss 42 und dem Signalanschluss 44 anliegende Eingangsspannung Vᵢₙ über einen Widerstand 56 skaliert und über einen aus einem Kondensator 58 und einem Widerstand 60 bestehenden Hochpass an eine Leuchtdiode 62 angelegt, die der anliegenden Spannung entsprechend Licht emittiert. Der Zusammenhang zwischen der anliegenden Spannung Vᵢₙ und der Strahlungsleistung S der Leuchtdiode 62 ist im rechten Teil von Figur 6 in einem Diagramm schematisch dargestellt, dessen Abszisse die Zeit anzeigt und dessen Ordinate die Eingangsspannung Vᵢₙ und die Strahlungsleistung S in nicht bestimmten Einheiten angibt.

In Figur 7 ist eine Funktionsskizze der Empfangseinrichtung 40 gezeigt. Die Empfangseinrichtung 40 beinhaltet eine Fotodiode 64, die in Abhängigkeit von der Intensität einfallenden Lichts eine Spannung erzeugt. Diese wird in einem ersten Schaltungsabschnitt mit Hilfe eines Operationsverstärkers 66, eines Widerstandes 68 und eines Kondensators 70 geeignet verstärkt und mit Hilfe eines weiteren Operationsverstärkers 72 zu einer Ausgabespannung Vₒᵤₜ invertiert. Der Zusammenhang der empfangenen Strahlungsleistung S' (die multipliziert mit einem Dämpfungsfaktor der von der LED 62 emittierten Strahlungsleistung entspricht) und dem Ausgabesignal Vₒᵤₜ der Empfangseinrichtung 40 ist im rechten Teil von Figur 7 in einem Diagramm schematisch dargestellt, dessen Abszisse wiederum die Zeit und dessen Ordinate die empfangene Strahlungsleistung S' und die Ausgangsspannung Vₒᵤt in unbestimmten Einheiten zeigt.

Die Sendeeinrichtung 38 und die Empfangseinrichtung 40 sind so ausgebildet, dass das Ausgabesignal Vₒᵤₜ der Empfangseinrichtung 40 trotz einer möglichen Dämpfung des übertragenen optischen Signales der Eingangsspannung Vᵢₙ entspricht. Selbst wenn also das zwischen den Kupplungsteilen 10 und 12 übertragene optische Signal einer gewissen Dämpfung unterworfen ist, ist das effektiv übertragene elektrische Signal Vₒᵤₜ gegenüber dem Ursprungssignal Vᵢₙ nicht gedämpft.

Bei dem elektrischen Eingangssignal Vᵢₙ kann es sich beispielsweise um ein elektrisches Hochfrequenzsignal handeln, das innerhalb zweier Fahrzeuge über ein Koaxialkabel geleitet wird und nur zum Passieren der Signalkupplung mit Hilfe der Sendeeinrichtung 38 in ein optisches Signal umgewandelt wird. Die Signalkupplung mit den aktiven Elementen 38 und 40 findet aber beispielsweise auch Verwendung, wenn in den Fahrzeugen bereits optische Signale durch Lichtwellenleiter übertragen werden. Diese werden dann im ersten Kupplungsteil 10 zunächst in ein elektrisches Signal umgewandelt, das dann an die Sendeeinrichtung 38 angelegt wird. Das Ausgangssignal Vₒᵤₜ der Empfangseinrichtung 40 wird dann im zweiten Kupplungsteil wiederum in ein optisches Signal umgewandelt und in einen weiteren Lichtwellenleiter eingespeist.

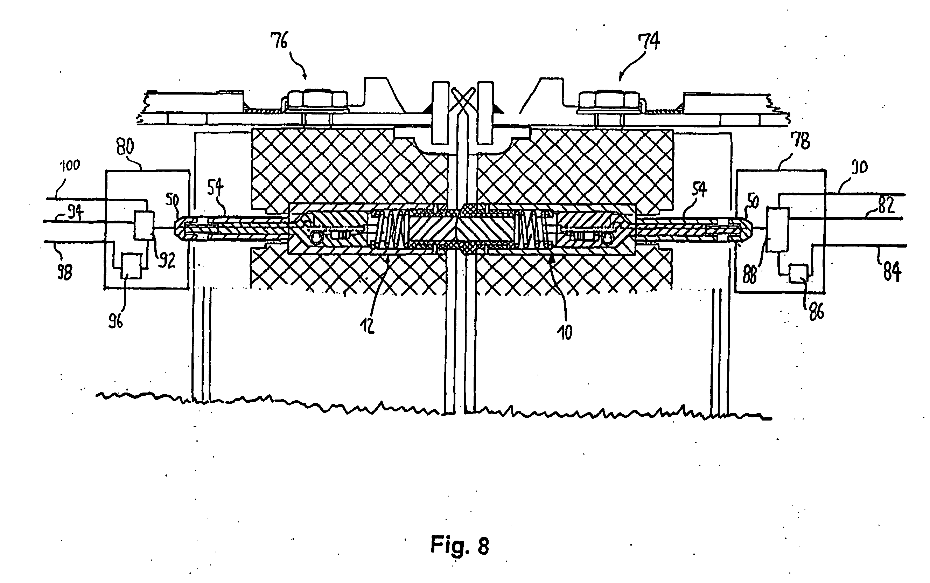

In Figur 8 ist ein Abschnitt einer Leitungskupplung zur Verwendung in Kombination mit einer automatischen Schienenfahrzeugskupplung in Schnittdarstellung gezeigt. Eine automatische Schienenfahrzeugskupplung wird verwendet, wenn die Zugteile häufiger gekuppelt und entkuppelt werden müssen. Dann ist die zugehörige Leitungskupplung so ausgebildet, dass ihre elektrischen und optischen Kontakte beim automatischen Kuppeln der Zugteile ebenfalls automatisch mitgekuppelt werden.

Die Leitungskupplung umfasst zwei Kontaktträger 74 und 76, in denen neben einer Reihe elektrischer Kontakte (nicht gezeigt) auch die oben beschriebenen Kupplungsteile 10 und 12 der Signalkupplung eingesetzt sind. Die Kupplungsteile 10 und 12 sind mit dem Gewinde 54 des Anschlussbolzens 46 stirnseitig in die Kontaktträger 74 bzw. 76 eingeschraubt, wodurch das Gewinde 54 auf Massepotential gelegt wird. Gleichzeitig kommt der Signalkontaktabschnitt 50 des ersten Kupplungsteiles 10 mit einer schematisch dargestellten ersten Signalverarbeitungseinheit 78 und der Signalanschlussabschnitt 50 des zweiten Kupplungsteiles 12 mit einer schematisch dargestellten zweiten Signalverarbeitungseinheit 80 elektrisch in Kontakt.

Man erkennt, dass die Kupplungsteile 10 und 12 sehr leicht ein- und ausbaubar sind. Darin besteht ein großer Vorteil gegenüber herkömmlichen optischen Signalkupplungen, deren Kupplungsteile mit Lichtwellenleitern verbunden sind und die nur mit großer Mühe, insbesondere nicht von der Stirnseite des Kontaktträgers 74 bzw. 76 her eingebaut oder ausgetauscht werden können.

Im gezeigten Ausführungsbeispiel werden der ersten Signalverarbeitungseinheit 78 über ein Koaxialkabel 82 elektrische Signale und über einen Lichtwellenleiter 84 optische Signale zugeführt. Die optischen Signale des Lichtwellenleiters 84 werden in einer Wandlereinheit 86 in elektrische Signale umgewandelt und zusammen mit den elektrischen Signalen der aus der elektrischen. Leitung 82 einer Steuerungseinheit 88 zugeführt. In der Steuerungseinheit 88 werden die beiden eingehenden elektrischen Signale zu einem Multiplexsignal verarbeitet, das auf den Signalanschluss 50 des ersten Kupplungsteiles übertragen wird. Dazu hat die Steuerungseinheit 88 einen Mikroprozessor (nicht gezeigt), bei dem es sich um einen Industrie-PC oder ein sogenanntes Field Programmable Gate Array (FPGA) handelt. Ein FPGA hat gegenüber herkömmlichen Mikroprozessoren den Vorteil, dass es mehrere Befehle gleichzeitig abarbeiten kann, als zu einem echten Multitasking in der Lage ist.

Die Steuerungseinheit 88 ist ferner mit einer Datenleitung 90 verbunden, über die ihr weitere Informationen zur Signalverarbeitung zugeführt werden. Beispielsweise kann über die Datenleitung 90 signalisiert werden, dass bereits übertragene Signale unvollständig angekommen sind und erneut zu senden sind.

Die Umwandlung der elektrischen Multiplexsignale in optische Signale durch die Sendeeinrichtung 38 und deren Übertragung vom ersten Kupplungsteil 10 auf das zweite Kupplungsteil 12 erfolgen wie oben beschrieben. Vom Signalanschluss 50 des zweiten Kupplungsteiles 12 gelangen die in der Empfangseinrichtung 40 erzeugten elektrischen Signale in eine Steuerungseinheit 92 der zweiten Signalverarbeitungseinheit 80. In der Steuerungseinheit 92 werden die Multiplexsignale in individuelle Signale zerlegt. Die ursprünglich über die elektrische Leitung 82 eingegangenen Signale werden über eine elektrische Leitung 94 weitergeleitet. Die ursprünglich über den Lichtwellenleiter 84 eingegangenen Signale werden in einer Wandlereinheit 96 wieder in optische Signale umgewandelt und in einen Lichtwellenleiter 98 eingespeist.

Über eine weitere Datenleitung 100 können Signale von der Steuerungseinheit 92 weitergeleitet werden, beispielsweise Fehlermeldungen, wenn Signale fehlerhaft empfangen wurden. Die Steuerungseinheit 92 enthält ebenfalls einen Industrie-PC oder ein FPGA (nicht gezeigt).

Die Signalverarbeitungseinheiten 78 und 80 können auch im Gehäuse 14 der Kupplungsteile 10 bzw. 12 untergebracht werden. Ferner können die Signalverarbeitungseinheiten 78 und 80 jeweils mit einem sendefähigen Kupplungsteil (ähnlich dem ersten Kupplungsteil 10) und einem empfangsfähigen Kupplungsteil (ähnlich dem zweiten Kupplungsteil 12) verbunden sein. Dann können Signale von beiden Seiten der Kupplung auf die jeweils andere Seite übertragen werden und die Signalverarbeitungseinheiten 78 und 80 können in beide Richtungeh miteinander kommunizieren.

Die Kupplungsteile 10 und 12 können allerdings nicht nur wie in Fig. 8 gezeigt in speziellen Kontaktträgern, sondern auch direkt in den Kupplungsköpfen einer mechanischen Schienenfahrzeugskupplung, beispielsweise einer automatischen Mittelpufferkupplung angeordnet sein (nicht gezeigt). Die oben beschriebene Unempfindlichkeit der optischen Signalkupplung gegenüber mechanischen Toleranzen macht diese Anordnung möglich, die bei herkömmlichen optischen Signalkupplungen nicht funktionieren würde. Dadurch kann in manchen Fällen eine separate Leitungskupplung eingespart werden.

### Bezugszeichenliste

- 10: erstes Kupplungsteil
- 12: zweites Kupplungsteil
- 14: Gehäuse
- 16: hülsenartiger Gehäuseabschnitt
- 18: lichtleitendes Element
- 20: Feder
- 22: lichtundurchlässige Hülse
- 24: transparenter Kern
- 26, 26': sphärische Stirnfläche
- 27: Führungsnut
- 28: Führungsbolzen
- 30: innerer Innenraumabschnitt
- 32: äußerer Innenraumabschnitt
- 34: Absatz
- 36: Metallring
- 38: Sendeeinheit
- 40: Empfangseinheit
- 42: Masseanschluss
- 44: Signalanschluss
- 46: Anschlussbolzen
- 48: Masseanschlussabschnitt
- 50: Signalanschlussabschnitt
- 52: Isolierungsstück
- 54: Außengewinde
- 56: Widerstand
- 58: Kondensator
- 60: Widerstand
- 62: LED
- 64: Fotodiode
- 66: Operationsverstärker
- 68: Widerstand
- 70: Kondensator
- 72: Operationsverstärker
- 74: Kontaktträger
- 76: Kontaktträger
- 78: Signalverarbeitungseinheit
- 80: Signalverarbeitungseinheit
- 82: elektrische Signalleitung
- 84: Lichtwellenleiter
- 86: Signalwandler
- 88: Steuerungseinheit
- 90: Datenleitung
- 92: Steuerungseinheit
- 94: elektrische Signalleitung
- 96: Signalwandler
- 98: Lichtwellenleiter
- 100: Datenleitung

## Patentansprüche

1. Anordnung, umfassend eine automatische Schienenfahrzeugskupplung und eine Leitungskupplung zum Verbinden von Leitungen zweier miteinander kuppelbarer Schienenfahrzeuge, wobei die Leitungskupplung zwei elektrische Kontakte aufweisende Kontaktträger (74, 76), von denen jeweils einer an jedem Schienenfahrzeug befestigt ist, und mindestens eine optische Signalkupplung mit einem in dem einen Kontaktträger (74) angeordneten ersten Signalkupplungsteil (10) und einem in dem anderen Kontaktträger (76) angeordneten zweiten Signalkupplungsteil (12), zwischen denen optische Signale übertragen werden, umfasst, **dadurch gekennzeichnet, dass** das erste Kupplungsteil (10) eine Sendeeinrichtung (38) beinhaltet, die die zu übertragenden optischen Signale erzeugt, und das zweite Kupplungsteil (12) eine Empfangseinrichtung (40) beinhaltet, die die übertragenen optischen Signale detektiert.

2. Anordnung nach Anspruch 1, **dadurch gekennzeichnet, dass** das erste Kupplungsteil (10) einen Mikroprozessor umfasst, der die Erzeugung der Signale in der Sendeeinrichtung (38) steuert.

3. Anordnung nach Anspruch 1 oder 2, **dadurch gekennzeichnet, dass** das zweite Kupplungsteil (12) einen Mikroprozessor umfasst, der die in der Empfangseinrichtung (40) detektierten Signale verarbeitet.

4. Anordnung nach Anspruch 2 und 3, **dadurch gekennzeichnet, dass** der Mikroprozessor des ersten Kupplungsteiles (10) so programmiert ist, dass er mehrere individuelle Signale zu Multiplexsignalen vereint und der Mikroprozessor des zweiten Kupplungsteiles (12) so programmiert ist, dass er Multiplexsignale in mehrere individuelle Signale zerlegt.

5. Anordnung nach einem der vorhergehenden Ansprüche, **dadurch gekennzeichnet, dass** die Sendeeinrichtung (38) mindestens eine LED (62) zur Erzeugung der optischen Signale hat.

6. Anordnung nach einem der vorhergehenden Ansprüche, **dadurch gekennzeichnet, dass** die Empfangseinrichtung (40) eine Fotodiode (64) zum Detektierten der optischen Signale hat.

7. Anordnung nach einem der vorhergehenden Ansprüche, **dadurch gekennzeichnet, dass** im ersten und zweiten Kupplungsteil (10, 12) jeweils ein lichtleitendes Element (18) gehalten ist, von denen eines eine sphärisch konkave Stirnfläche (26) und das andere eine mit gleichem Krümmungsradius sphärisch konvexe Stirnfläche (26') hat und von denen mindestens eines derart elastisch vorgespannt ist, dass die lichtleitenden Elemente (18) mit ihren Stirnflächen (26, 26') aneinander gedrückt werden, wenn die zwei Fahrzeuge miteinander gekuppelt sind.

8. Anordnung nach Anspruch 7, **dadurch gekennzeichnet, dass** die lichtleitenden Elemente (18) jeweils aus einer lichtundurchlässigen Hülse (22) und einem darin aufgenommenen transparenten Kern (24) bestehen.

9. Anordnung nach Anspruch 8, **dadurch gekennzeichnet, dass** die Wanddicke der Hülse (22) im Bereich der Stirnfläche (26, 26') mindestens 1/10, vorzugsweise mindestens 1/5 des Krümmungsradius der Stirnflächen (26, 26') beträgt.

10. Anordnung nach Anspruch 8 oder 9, **dadurch gekennzeichnet, dass** die lichtundurchlässigen Hülsen (22) elektrisch leitend sind und dass beim Aneinanderdrücken der Stirnflächen (26, 26b, 26', 26'b) der lichtleitenden Elemente (18) des ersten und zweiten Kupplungsteils (10,12) ein elektrischer Kontakt zwischen den zugehörigen Hülsen (22) hergestellt wird, über den elektrische Signale von einem Kupplungsteil (10, 12) auf das andere Kupplungsteil (12, 10) übertragbar sind.

11. Anordnung nach Anspruch 10, **dadurch gekennzeichnet, dass** der Abschnitt (26b, 26'b) einer jeden Hülse (22), der Teil einer Stirnfläche (26, 26') ist, hartvergoldet ist.

12. Anordnung nach Anspruch 10 oder 11, **dadurch gekennzeichnet, dass** zumindest ein Teil der Signale, die als optische Signale zwischen den Kupplungsteilen (10, 12) übertragen werden, zusätzlich als elektrische Signale über die Hülsen (22) der beiden Kupplungsteile (10, 12) übertragen werden.

13. Anordnung nach einem der Ansprüche 7 bis 12, **dadurch gekennzeichnet, dass** das erste und das zweite Kupplungsteil (10, 12) ein Gehäuse (14) haben, an dessen einem axialen Ende ein hülsenartiger Abschnitt (16) ausgebildet ist, in dem das lichtleitende Element (18) axial verschiebbar gelagert und in Richtung auf dieses eine axiale Ende elastisch vorgespannt ist, und an dessen anderem Ende ein Anschlussbolzen (46) ausgebildet ist, der zum Einsetzen in einen Kontaktträger (74, 76) bestimmt ist.

14. Anordnung nach einem der Ansprüche 10 bis 12 und Anspruch 13, **dadurch gekennzeichnet, dass** zwischen der Hülse (22) des lichtleitenden Elementes (18) und dem hülsenartigen Abschnitt (16) des Gehäuses (14) eines jeden Kupplungsteiles (10, 12) ein elektrischer Schleifkontakt besteht, über den elektrische Signale zwischen dem hülsenartigen Abschnitt (16) und der Hülse (22) übertragbar sind.

15. Anordnung nach Anspruch 13 oder 14, **dadurch gekennzeichnet, dass** der Anschlussbolzen (46) aus zwei gegeneinander isolierten Abschnitten (48, 50) besteht, von denen der eine mit dem Massepotential und der andere mit einer elektrischen Signalleitung verbunden ist, wenn der Anschlussbolzen (46) in den Kontaktträger (74, 76) eingesetzt ist.

16. Anordnung nach einem der vorhergehenden Ansprüche, **dadurch gekennzeichnet, dass** in jedem der Kontaktträger (74, 76) jeweils sowohl ein Signalkupplungsteil (10) mit Sendeeinrichtung (38) als auch ein Signalkupplungsteil (12) mit Empfangseinrichtung (40) angeordnet ist, die zusammen zwei optische Signalkupplungen bilden.

17. Anordnung nach Anspruch 16, **dadurch gekennzeichnet, dass** die Sendeeinrichtung (38) und die Empfangseinrichtung (40) der Kupplungsteile (10, 12) eines jeden Kontaktträgers (74, 76) mit einem gemeinsamen Mikroprozessor verbunden sind, der die Erzeugung der Signale in der Sendeeinrichtung (38) steuert und die in der Empfangseinrichtung (40) detektierten Signale verarbeitet.

## Claims

1. Arrangement, comprising an automatic rail vehicle coupling and a conductor coupling for the connection of conductors of two rail vehicles couplable with one another, wherein the conductor coupling comprises two contact carriers (74, 76) including electrical contacts, one of said contact carriers (74, 76) being fixed to each rail vehicle, respectively, and at least one optical signal coupling with a first signal coupling part (10) arranged in one of said contact carriers (74) and a second signal coupling part (12) arranged in the other contact carrier (76), between said coupling parts (10) optical signals being transmitted, **characterized in that**
the first coupling part (10) contains a sending device (38) which creates the optical signals to be transmitted, and the second coupling part (12) contains a receiving device (40) which detects the transmitted optical signals.

2. Arrangement according to claim 1, further **characterized in that** the first coupling part (10) includes a microprocessor which controls the creation of the signals in the sending device (38).

3. Arrangement according to claim 1 or 2, further **characterized in that** the second coupling part (12) includes a microprocessor which processes the signals detected in the receiving device (40).

4. Arrangement according to claim 2 or 3, further **characterized in that** the microprocessor of the first coupling part (10) is so programmed that it merges several individual signals into multiplexed signals and the microprocessor of the second coupling part (12) is so programmed that it divides multiplexed signals into several individual signals.

5. Arrangement according to one of the preceding claims, further **characterized in that** the sending device (38) has at least one LED (62) for creating the optical signals.

6. Arrangement according to one of the preceding claims, further **characterized in that** the receiving device (40) has a photo diode (64) for detecting the optical signals.

7. Arrangement according to one of the preceding claims, further **characterized in that** in each of the first and second coupling parts (10, 12) a light conducting element (18) is supported, of which elements one has a spherically concave end surface (26) and the other has a spherically convex end surface (26') with an identical radius of curvature and of which at least one is so elastically biased that the light conducting elements (18) are pressed against one another with their end surfaces (26, 26'), when the two vehicles are coupled with one another.

8. Arrangement according to claim 7, further **characterized in that** each of the light conducting elements (18) includes a light opaque sleeve (22) and a transparent core (24) received in the sleeve (22).

9. Arrangement according to claim 8, further **characterized in that** the wall thickness of the sleeve (22) in the region of the end surface (26, 26') has a value equal to at least 1/10, and preferably of at least 1/5, of the radius of curvature of the end surfaces (26, 26').

10. Arrangement according to claim 8 or 9, further **characterized in that** the light opaque sleeves (22) are electrically conducting and **in that** upon the pressing together of the end surfaces (26, 26b, 26', 26'b) the light conducting elements (18) of the first and second coupling parts (10, 12) establish an electrical contact between the associated sleeves (22) through which electric signals from one coupling part (10, 12) can be transmitted to the other coupling part (12, 10).

11. Arrangement according to claim 10, further **characterized in that** the section (26, 26') of each sleeve (22) which is part of each end surface (26, 26') is plated with hard gold.

12. Arrangement according to claim 10 or 11, further **characterized in that** at least a portion of the signals which are transmitted between the coupling parts (10, 12) as optical signals are additionally transmitted through the sleeves (22) of the two coupling parts (10, 12) as electric signals.

13. Arrangement according to one of claims 7 to 12, further **characterized in that** each of the first and second coupling parts (10, 12) has a housing (14), on one axial end of which a sleeve-like section (16) is formed in which the light conducting element (18) is axially slidably supported and is elastically biased in the direction toward the one axial end, and at the other end of which a connector pin (46) is formed which is designed for placement in a contact carrier (74, 76).

14. Arrangement according to one of claims 10 to 12 and to claim 13, further **characterized in that** between the sleeve (22) of the light conducting element (18) and the sleeve-like section (16) of the housing (14) of each coupling part (10, 12) an electrical sliding contact exists through which electric signals are transmittable between the sleeve-like section (16) and the sleeve (22).

15. Arrangement according to claim 13 or 14, further **characterized in that** the connector pin (46) comprises two sections (48, 50) insulated from one another, of which one is connected with ground potential and the other of which is connected with an electric signal conductor when the connector pin (46) is installed in the contact carrier (74, 76).

16. Arrangement according to one of the preceding claims, further **characterized in that** in each contact carrier (74, 76) is arranged both a signal coupling part (10) with a sending device (38) and a signal coupling part (12) with a receiving device (40) of which coupling parts together form two optical signal couplings.

17. Arrangement according to claim 16, further **characterized in that** the sending device (38) and the receiving device (40) of the coupling parts (10, 12) of each contact carrier (74, 76) are connected with a common microprocessor which controls the generation of the signals in the sending device (38) and processes the signals detected in the receiving device (40).

## Revendications

1. Ensemble comprenant un coupleur automatique des véhicules ferroviaires et un coupleur de lignes permettant de relier des lignes de deux véhicules ferroviaires pouvant être couplés l'un à l'autre, dans lequel ledit coupleur de lignes comprend deux supports de contacts (74, 76) qui comportent des contacts électriques et qui sont fixés chacun à un véhicule ferroviaire, et au moins un coupleur de signaux optiques qui comporte une première pièce de coupleur de signaux (10) qui est disposée dans l'un des supports de contacts (74) et une deuxième pièce de coupleur de signaux (12) qui est disposée dans l'autre support de contacts (76), des signaux optiques étant transmis entre lesdites pièces de coupleur, **caractérisé en ce que** la première pièce de coupleur (10) contient un dispositif d'émission (38) qui génère les signaux optiques à transmettre, et la deuxième pièce de coupleur (12) contient un dispositif de réception (40) qui détecte les signaux optiques transmis.

2. Ensemble selon la revendication 1, **caractérisé en ce que** la première pièce de coupleur (10) comporte un microprocesseur qui commande la génération des signaux dans le dispositif d'émission (38).

3. Ensemble selon la revendication 1 ou 2, **caractérisé en ce que** la deuxième pièce de coupleur (12) comporte un microprocesseur qui traite les signaux détectés dans le dispositif de réception (40).

4. Ensemble selon la revendication 2 ou 3, **caractérisé en ce que** le microprocesseur de la première pièce de coupleur (10) est programmé de façon à combiner plusieurs signaux individuels en signaux multiplexés, et **en ce que** le microprocesseur de la deuxième pièce de coupleur (12) est programmé de façon à décomposer des signaux multiplexés en plusieurs signaux individuels.

5. Ensemble selon l'une des revendications précédentes, **caractérisé en ce que** le dispositif d'émission (38) comporte au moins une LED (62) destinée à générer les signaux optiques.

6. Ensemble selon l'une des revendications précédentes, **caractérisé en ce que** le dispositif de réception (40) comporte une photodiode (64) destinée à détecter les signaux optiques.

7. Ensemble selon l'une des revendications précédentes, **caractérisé en ce que** les première et deuxième pièces de coupleur (10, 12) contiennent chacune un élément photoconducteur (18), l'un des éléments photoconducteurs présentant une surface frontale (26) sphériquement concave et l'autre élément photoconducteur présentant une surface frontale (26') sphériquement convexe de même rayon de courbure, et l'un au moins des éléments photoconducteurs étant précontraint élastiquement de façon à ce que lesdits éléments photoconducteurs (18) soient pressés l'un contre l'autre au niveau de leur surface frontale (26, 26') lorsque les deux véhicules sont couplés l'un à l'autre.

8. Ensemble selon la revendication 7, **caractérisé en ce que** les éléments photoconducteurs (18) sont constitués chacun d'un manchon (22) opaque à la lumière, et d'une âme (24) transparente à la lumière et logée à l'intérieur dudit manchon (22).

9. Ensemble selon la revendication 8, **caractérisé en ce que** l'épaisseur de paroi du manchon (22), dans la région de la surface frontale (26, 26'), est d'au moins 1/10, avantageusement d'au moins 1/5, du rayon de courbure des surfaces frontales (26, 26').

10. Ensemble selon la revendication 8 ou 9, **caractérisé en ce que** les manchons (22) opaques à la lumière sont électriquement conducteurs, et **en ce que**, lorsque les surfaces frontales (26, 26b, 26', 26'b) des éléments photoconducteurs (18) des première et deuxième pièces de coupleur (10, 12) sont pressées l'une contre l'autre, un contact électrique est établi entre les manchons associés (22) qui permet de transmettre des signaux électriques d'une pièce de coupleur (10, 12) à l'autre pièce de coupleur (12, 10).

11. Ensemble selon la revendication 10, **caractérisé en ce que** la portion (26b, 26'b) de chaque manchon (22), laquelle fait partie d'une surface frontale (26, 26'), est doré dur.

12. Ensemble selon la revendication 10 ou 11, **caractérisé en ce que** au moins une partie des signaux, qui sont transmis sous la forme de signaux optiques entre les pièces de coupleur (10, 12), est transmise en plus sous la forme de signaux électriques par les manchons (22) des deux pièces de coupleur (10, 12).

13. Ensemble selon l'une des revendications 7 à 12, **caractérisé en ce que** les première et deuxième pièces de coupleur (10, 12) comportent un boîtier (14), à une première extrémité axiale duquel est conformée une portion (16), de type manchon, dans laquelle l'élément photoconducteur (18) est monté de façon à pouvoir se déplacer axialement et précontraint élastiquement en direction de cette première extrémité axiale, et à l'autre extrémité de laquelle est conformé un boulon de raccordement (46) qui est destiné à être introduit dans un support de contacts (74, 76).

14. Ensemble selon l'une des revendications 10 à 12 et la revendication 13, **caractérisé en ce que**, entre le manchon (22) de l'élément photoconducteur (18) et la portion (16), de type manchon, du boîtier (14) de chaque pièce de coupleur (10, 12), est réalisé un contact électrique de frottement qui permet de transmettre des signaux électriques entre la portion (16) de type manchon et le manchon (22).

15. Ensemble selon la revendication 13 ou 14, **caractérisé en ce que** le boulon de raccordement (46) est constitué de deux portions (48, 50) qui sont isolées l'une de l'autre, et dont l'une est reliée au potentiel de masse et l'autre à la ligne de signaux électriques lorsque le boulon de raccordement (46) est introduit dans le support de contacts (74, 76).

16. Ensemble selon l'une des revendications précédentes, **caractérisé en ce que** chaque support de contacts (74, 76) contient une pièce de coupleur de signaux (10) comportant le dispositif d'émission (38) et une pièce de coupleur de signaux (12) comportant le dispositif de réception (40), lesquelles forment ensemble deux coupleurs de signaux optiques.

17. Ensemble selon la revendication 16, **caractérisé en ce que** le dispositif d'émission (38) et le dispositif de réception (40) des pièces de coupleur (10, 12) de chaque support de contacts (74, 76) sont reliés à un microprocesseur commun qui commande la génération des signaux dans le dispositif d'émission (38) et traite les signaux détectés dans le dispositif de réception (40).
